# EUROPEAN PATENT SPECIFICATION

(11) **EP 3 779 130 B1**
(45) Date of publication and mention of the grant of the patent: **02.07.2025**
(21) Application number: 20195100.1
(22) Date of filing: 12.10.2012
(51) Int. Cl.: F01D 25/16, F02K 3/06, F02C 7/06, F02C 7/20, F02C 7/36, F02C 3/107, F01D 5/06

(54) **METHOD OF SERVICING A GAS TURBINE ENGINE AND GAS TURBINE ENGINE FRONT CENTER BODY ARCHITECTURE**
VERFAHREN ZUR WARTUNG EINER GASTURBINE UND AUFBAU DES VORDEREN GEHÄUSEKÖRPERS EINER GASTURBINE
PROCÉDÉ D'ENTRETIEN D'UNE TURBINE À GAZ ET ARCHITECTURE DE PARTIE AVANT DU CORPS CENTRAL D'UNE TELLE TURBINE À GAZ

(30) Priority: 17.10.2011 US 201113275286; 27.10.2011 US 201113282919
(43) Date of publication of application: 17.02.2021
(62) Divisional of application: 12188417.5
(73) Proprietor: RTX Corporation, Farmington, CT 06032 (US)
(72) Inventor: DAVIS, Todd A., Tolland, CT 06084 (US); CIGAL, Brian P., Windsor, CT 06095 (US)
(74) Representative: Dehns

(56) References cited:
- EP-A2- 2 511 484
- GB-A- 2 320 527
- US-A- 4 744 214
- US-A- 5 433 674
- US-A1- 2009 081 039
- US-A1- 2010 105 516
- US-A1- 2011 130 246

## Description

### BACKGROUND

The present disclosure relates to a gas turbine engine, and in particular, to a case structure therefor.

Gas turbine engines typically include one or more rotor shafts that transfer power and rotary motion from a turbine section to a compressor section and fan section. The rotor shafts are supported within an engine static structure which is typically constructed of modules with individual case sections which are joined together at bolted flanges. The flanges form a joint capable of withstanding the variety of loads transmitted through the engine static structure. An ongoing issue for gas turbine engines is the ease and speed at which they can be serviced.

US 2009/081039 A1 discloses a gas turbine engine according to the preamble of claim 2.

### SUMMARY

According to a first aspect, there is provided a method for servicing a gas turbine engine as set forth in claim 1.

There is also provided a gas turbine engine as set forth in claim 2.

Embodiments of the disclosure are set forth in the dependent claims.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of an embodiment of a gas turbine engine;
Figure 2 is an enlarged cross-section of a portion of the gas turbine engine which illustrates a front center body assembly;
Figure 3 is an enlarged cross-section of the geared architecture of the gas turbine engine;
Figure 4 is an exploded perspective view of a front center body assembly;
Figure 5 is an enlarged perspective partial cross-section of a front center body support of the front center body assembly;
Figure 6 is an enlarged sectional view of the front center body support;
Figure 7 is an exploded view of the front center body support; and
Figure 8 is a schematic view of a forward gearbox removal from the gas turbine engine.

### DETAILED DESCRIPTION

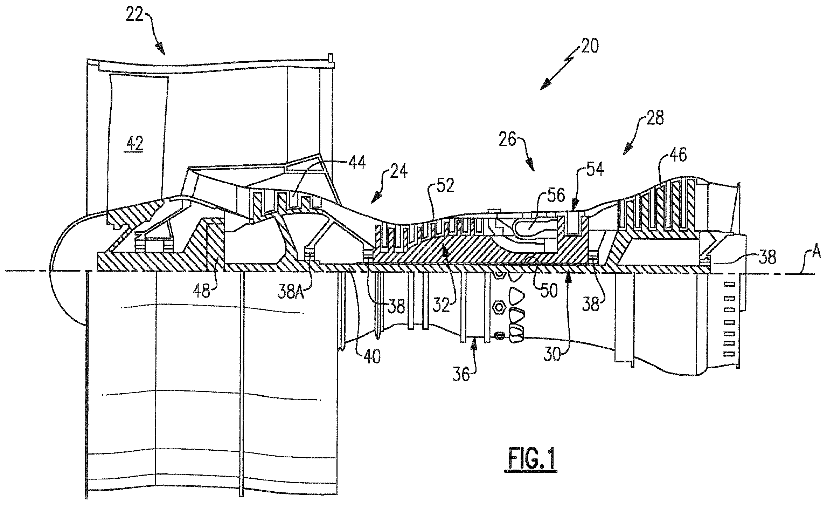

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

The engine 20 generally includes a low spool 30 and a high spool 32 mounted for rotation about an engine central longitudinal axis A relative to an engine static structure 36 via several bearing supports 38. The low spool 30 generally includes an inner shaft 40 that interconnects a fan 42, a low pressure compressor 44 and a low pressure turbine 46. The inner shaft 40 drives the fan 42 through a geared architecture 48 to drive the fan 42 at a lower speed than the low spool 30. The high spool 32 includes an outer shaft 50 that interconnects a high pressure compressor 52 and high pressure turbine 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by the bearing system 38 within the static structure 36. In one non-limiting embodiment, bearing system 38 includes a #2 bearing support 38A located within the compressor section 24.

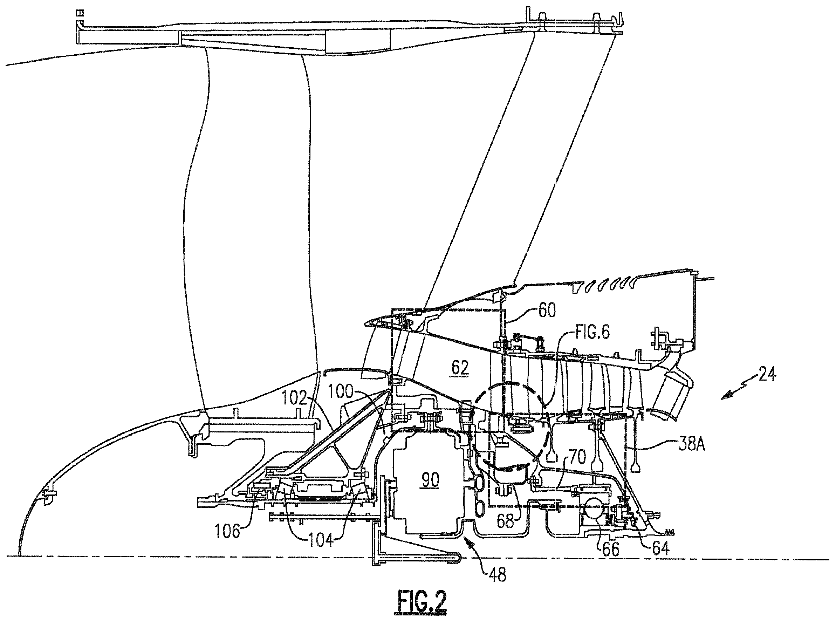

With reference to Figure 2, the engine static structure 36 proximate the compressor section 24 includes a front center body assembly 60 adjacent a #2 bearing support 38A. The front center body assembly 60 generally includes a front center body support 62. The #2 bearing support 38A generally includes a seal package 64, a bearing package 66, a flex support 68 and a centering spring 70.

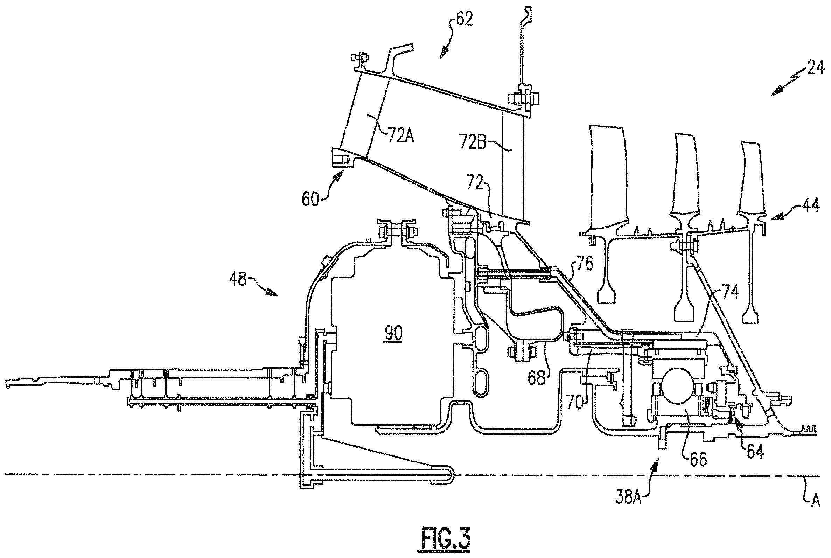

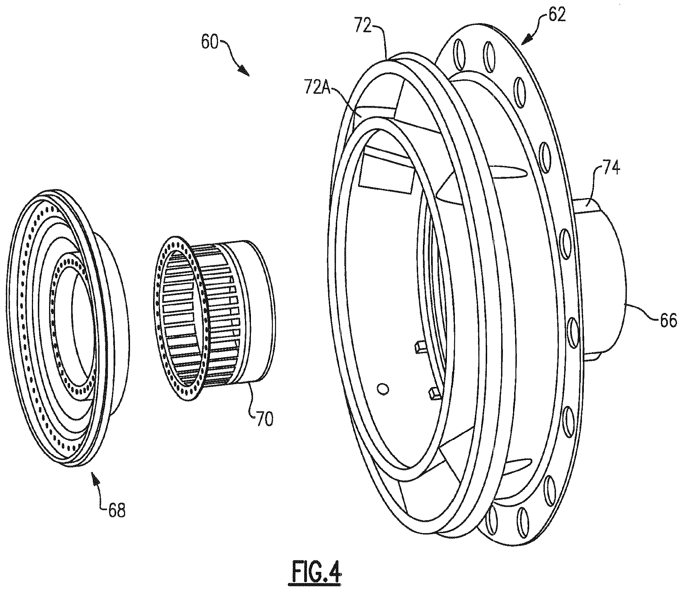

With reference to Figure 3, the flex support 68 provides a flexible attachment of the geared architecture 48 within the front center body support 62 (also illustrated in Figure 4). The flex support 68 reacts the torsional loads from the geared architecture 48 and facilitates vibration absorption as well as other support functions. The centering spring 70 is a generally cylindrical cage-like structural component with a multiple of beams which extend between flange end structures (also illustrated in Figure 4). The centering spring 70 resiliently positions the bearing package 66 with respect to the low spool 30. In one embodiment, the beams are double-tapered beams arrayed circumferentially to control a radial spring rate that may be selected based on a plurality of considerations including, but not limited to, bearing loading, bearing life, rotor dynamics, and rotor deflection considerations.

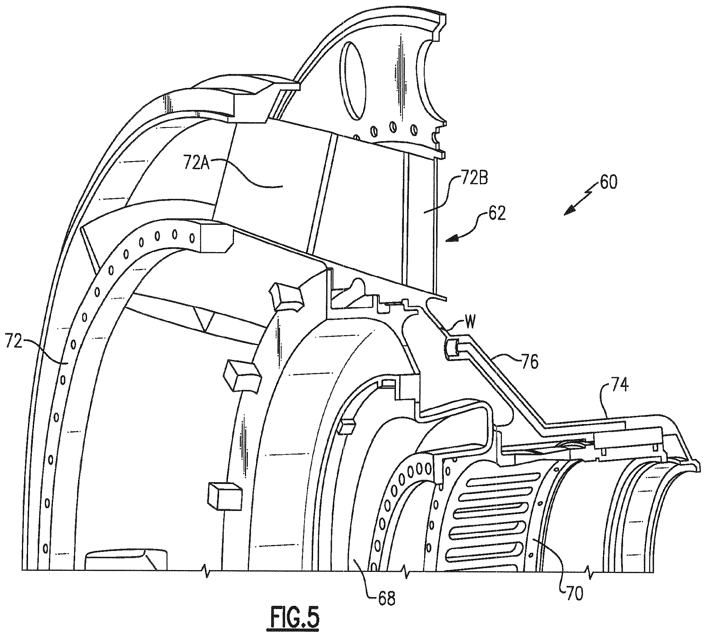

The front center body support 62 includes a front center body section 72 and a bearing section 74 defined about axis A with a frustro-conical interface section 76 therebetween (Figure 5). The front center body section 72 at least partially defines the core flowpath into the low pressure compressor 44. The front center body section 72 includes an annular core passage with a multiple of front center body vanes 72A, 72B. The bearing section 74 is defined radially inward of the front center body section 72. The bearing section 74 locates the bearing package 66 and the seal package 64 with respect to the low spool 30. The frustro-conical interface section 76 combines the front center body section 72 and the bearing section 74 to form a unified load path, substantially free of kinks typical of a conventional flange joint, from the bearing package 66 to the outer periphery of the engine static structure 36. The frustro-conical interface section 76 may include a weld W (Figure 5) or, alternatively, be an integral section such that the front center body support 62 is a unitary component.

The integral, flange-less arrangement of the frustro-conical interface section 76 facilitates a light weight, reduced part count architecture with an increased ability to tune the overall stiffness and achieve rotor dynamic requirements. Such an architecture also further integrates functions such as oil and air delivery within the bearing compartment which surrounds bearing package 66.

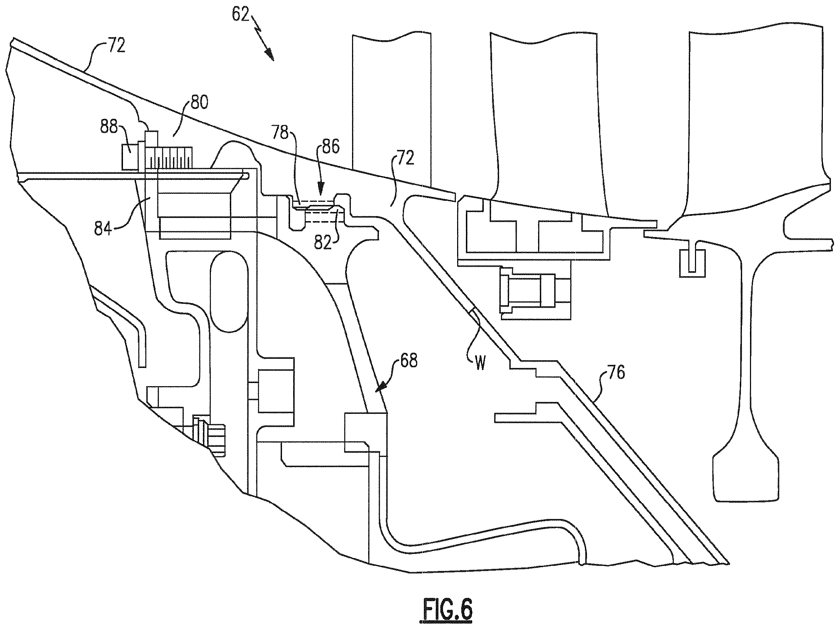

With reference to Figure 6, the front center body support 62 includes mount features to receive the flex support 68. In one disclosed non-limiting embodiment, the mount features of the front center body support 62 includes an internal spline 78 and a radial inward directed fastener flange 80 on the front center body section 72. The flex support 68 includes a corresponding outer spline 82 and radially outwardly directed fastener flange 84. The flex support 68 is received into the front center body support 62 at a splined interface 86 formed by splines 78, 82 and retained therein such that fastener flange 84 abuts fastener flange 80. A set of fasteners 88 such as bolts are threaded into the fastener flanges 80, 84 to mount the flex support 68 within the front center body support 62.

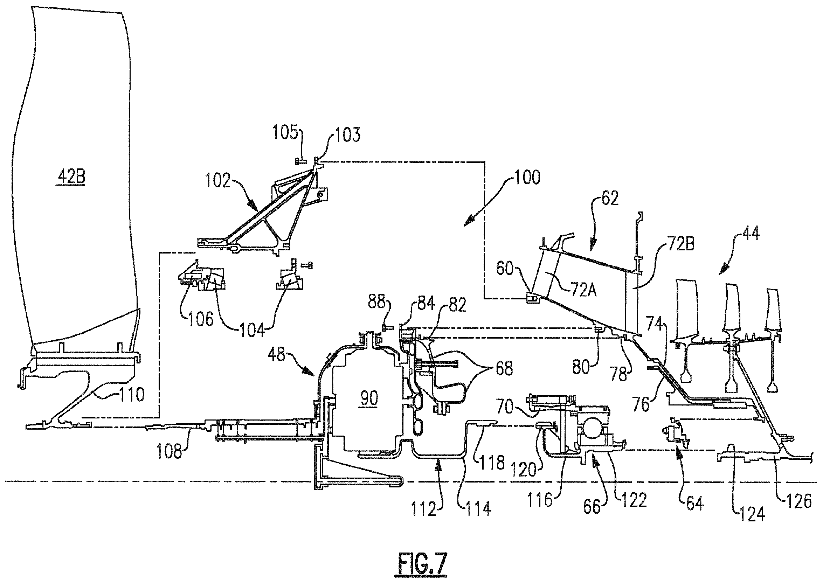

With reference to Figure 7, the fasteners 88 are directed forward to provide access from a forward section of the front center body assembly 60 opposite the bearing package 66 of the number two bearing system 38A. The fasteners 88 are thereby readily removed to access a gearbox 90 of the geared architecture 48.

A front wall 102 aft of the fan 42 is mounted to a forward section of the front center body support 62 to provide access to the geared architecture 48 from the front of the engine 20. The front wall 102 includes a flange 103 mountable to the front center body support 62 at the flange 80 by a multiple of fasteners 105, which fasteners 105 may in one non-limiting embodiment be bolts. The front wall 102 and the front center body support 62 define a bearing compartment 100 (also shown in Figure 2) which mounts to the bearing package 66. The front wall 102 is removable such that the gearbox 90 may be accessed as a module. The gearbox 90 may thereby be accessed to facilitate rapid on-wing service.

It should be appreciated that various bearing structures 104 (illustrated schematically and in Figure 2) and seals 106 (illustrated schematically and in Figure 2) may be supported by the front wall 102 to contain oil and support rotation of an output shaft 108. The output shaft 108 connects with the geared architecture 48 to drive the fan 42. Fan blades 42B extend from a fan hub 110 which are mounted to the output shaft 108 for rotation therewith. It should be appreciated that the bearing structures 104 and seals 106 may, in the disclosed non-limiting embodiment may be disassembled with the front wall 102 as a unit after removal of the fan hub 110.

The gearbox 90 is driven by the low spool 30 (Figure 1) through a coupling shaft 112. The coupling shaft 112 transfers torque through the bearing package 66 to the gearbox 90 as well as facilitates the segregation of vibrations and other transients. The coupling shaft 112 generally includes a forward coupling shaft section 114 and an aft coupling shaft section 116 which extends from the bearing package 66. The forward coupling shaft section 114 includes an interface spline 118 which mates with an aft spline 120 of the aft coupling shaft section 116. An interface spline 122 of the aft coupling shaft section 116 connects the coupling shaft 112 to the low spool 30 through, in this non limiting embodiment, splined engagement with a spline 124 on a low pressure compressor hub 126 of the low pressure compressor 44.

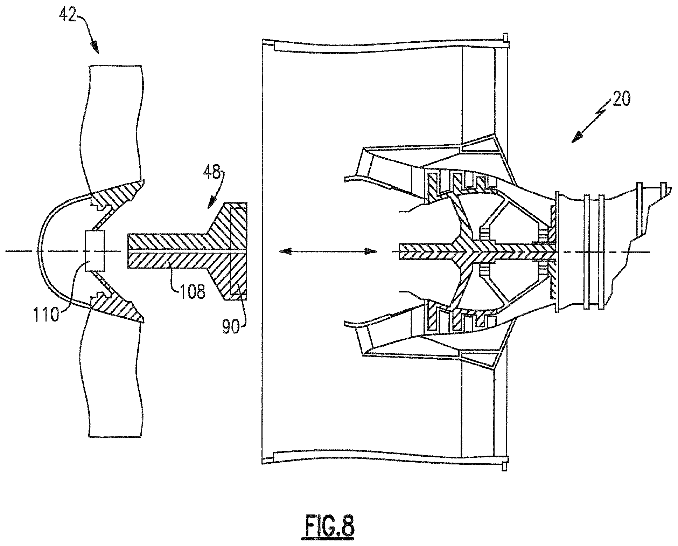

To remove the gearbox 90, the fan hub 110 is disassembled from the output shaft 108. The multiple of fasteners 105 are then removed such that the front wall 102 is disconnected from the front center body support 62. The multiple of fasteners 88 are then removed from the front of the engine 20. The geared architecture 48 is then slid forward out of the front center body support 62 such that the interface spline 118 is slid off the aft spline 120 and the outer spline 82 is slid off the internal spline 78. The geared architecture 48 is thereby removable from the engine 20 as a module (Figure 8; illustrated schematically). It should be appreciated that other componentry may need to be disassembled to remove the geared architecture 48 from the engine 20, however, such disassembly is relatively minor and need not be discussed in detail. It should be further appreciated that other components such as the bearing package 66 and seal 64 are also now readily accessible from the front of the engine 20.

Removal of the gearbox 90 from the front of the engine 20 as disclosed saves significant time and expense. The geared architecture 48, is removable from the engine 20 as a module and does not need to be further disassembled. Moreover, although the geared architecture 48 must be removed from the engine to gain access to the bearing package 66 and the seal 64, the geared architecture 48 does not need to be removed from the engine 20 to gain access to the engine core itself.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason the appended claims should be studied to determine true scope and content.

## Claims

1. A method for servicing a gas turbine engine (10) comprising:
providing access from a forward section of a front center body assembly (60) to a gearbox (90) driven by a low spool (30);
disassembling a fan (42) mounted to the geared architecture (48);
removing a first multiple of fasteners (105) located within the forward section of a front center body assembly (60) to disassemble a front wall (102) from a front center body support (62) of the front center body assembly (60); and
removing a second multiple of fasteners (88) to disconnect a flex support (68) from the front center body support (62), the second multiple of fasteners (88) being accessed from a forward section of the front center body assembly (60).

2. A gas turbine engine comprising:
a gearbox (90) defined along an engine axis; and
a front center body support (62) defined around said engine axis, **characterised in that** the gas turbine engine further comprises:
a front wall (102) mounted to said front center body support (62), said front wall (102) removable from said front center body support (62) to access said gearbox (90), wherein said front center body support (62) includes a flange (80) which abuts a flange (103) of said front wall (102);
a first multiple of fasteners (105) which attach said flange (103) of said front wall (102) to said flange (80) of said front center body support (62), said first multiple of fasteners (105) being accessible from a forward section of the gas turbine engine;
a flex support (68) providing a flexible attachment of the gearbox (90) within the front center body support (62); and
a second multiple of fasteners (88) which attach the front center body support (62) to the flex support (68), the second multiple of fasteners (88) being accessible from a forward section of the front center body assembly (60).

3. The gas turbine engine as recited in claim 2, wherein said front center body support (62) is defined about an engine longitudinal axis.

4. The gas turbine engine as recited in claim 2 or 3, wherein said front center body support (62) at least partially defines a core flow path.

5. The gas turbine engine as recited in any of claims 2 to 4, further comprising a seal package (64) mounted to said front center body support (62).

6. The gas turbine engine as recited in any of claims 2 to 5, further comprising a bearing package (66) mounted to said front center body support (62), and a low spool (30) operable to drive said gearbox (90).

7. The gas turbine engine as recited in any of claims 2 to 6, wherein said front wall (102) supports a bearing package (64) to support an output shaft driven by said gearbox (90), and wherein said output shaft is operable to drive a fan (42).

8. The gas turbine engine as recited in claim 3 or 4, wherein said gearbox (90) drives a fan section (42) at a speed different than a speed of a low speed spool (30).

## Patentansprüche

1. Verfahren zur Wartung einer Gasturbine (10), umfassend:
Bereitstellen des Zugangs von einer Baugruppe des vorderen Gehäusekörpers (60) zu einem Getriebe (90), das von einer Niederdrehzahlspule (30) angetrieben wird;
Demontage eines an der Getriebearchitektur (48) montierten Lüfters (42);
Entfernen einer ersten Vielzahl von Befestigungselementen (105), die sich im vorderen Abschnitt einer Baugruppe des vorderen Gehäusekörpers (60) befinden, um eine vordere Wand (102) von einem Träger des vorderen Gehäusekörpers (62) der Baugruppe des vorderen Gehäusekörpers (60) zu demontieren; und
Entfernen einer zweiten Vielzahl von Befestigungselementen (88), um einen Biegeträger (68) vom Träger des vorderen Gehäusekörpers (62) zu trennen, wobei die zweite Vielzahl von Befestigungselementen (88) von einem vorderen Abschnitt der Baugruppe des vorderen Gehäusekörpers (60) zugänglich ist.

2. Gasturbine, umfassend:
ein Getriebe (90), das entlang einer Motorachse definiert ist; und
einen Träger des vorderen Gehäusekörpers (62), der um die Turbinenachse herum definiert ist, **dadurch gekennzeichnet, dass** die Gasturbine ferner umfasst:
eine vordere Wand (102), die am Träger des vorderen Gehäusekörpers (62) montiert ist, wobei die vordere Wand (102) vom Träger des vorderen Gehäusekörpers (62) abnehmbar ist, um Zugang zu dem Getriebe (90) zu erhalten, wobei der Träger des vorderen Gehäusekörpers (62) einen Flansch (80) umfasst, der an einen Flansch (103) der vorderen Wand (102) angrenzt;
eine erste Vielzahl von Befestigungselementen (105), die den Flansch (103) der vorderen Wand (102) mit dem Flansch (80) des Trägers des vorderen Gehäusekörpers (62) verbinden, wobei die erste Vielzahl von Befestigungselementen (105) von einem vorderen Abschnitt der Gasturbine aus zugänglich ist;
eine flexible Halterung (68), die eine flexible Befestigung des Getriebes (90) innerhalb des Trägers des vorderen Gehäusekörpers (62) ermöglicht; und
eine zweite Vielzahl von Befestigungselementen (88), die den Träger des vorderen Gehäusekörpers (62) am Biegeträger (68) befestigen, wobei die zweite Vielzahl von Befestigungselementen (88) von einem vorderen Abschnitt der Baugruppe des vorderen Gehäusekörpers (60) zugänglich ist.

3. Gasturbine nach Anspruch 2, wobei der Träger des vorderen Gehäusekörpers (62) um eine Längsachse der Turbine herum definiert ist.

4. Gasturbine nach Anspruch 2 oder 3, wobei der Träger des vorderen Gehäusekörpers (62) zumindest teilweise einen Kernströmungspfad definiert.

5. Gasturbine nach einem der Ansprüche 2 bis 4, ferner umfassend ein Dichtungspaket (64), das am Träger des vorderen Gehäusekörpers (62) montiert ist.

6. Gasturbine nach einem der Ansprüche 2 bis 5, ferner umfassend ein am Träger des vorderen Gehäusekörpers (62) montiertes Lagerpaket (66) und eine Niederdrehzahlspule (30), die zum Antreiben des Getriebes (90) dient.

7. Gasturbine nach einem der Ansprüche 2 bis 6, wobei die vordere Wand (102) ein Lagerpaket (64) trägt, um eine von dem Getriebe (90) angetriebene Abtriebswelle zu lagern, und wobei die Abtriebswelle einen Lüfter (42) antreiben kann.

8. Gasturbine nach Anspruch 3 oder 4, wobei das Getriebe (90) einen Lüfterabschnitt (42) mit einer Drehzahl antreibt, die sich von der Drehzahl einer Niederdrehzahlspule (30) unterscheidet.

## Revendications

1. Procédé d'entretien d'un moteur à turbine à gaz (10), comprenant :
la fourniture de l'accès depuis une section avant d'un ensemble de corps central avant (60) à une boîte de vitesses (90) entraînée par une bobine basse (30) ;
le démontage d'un ventilateur (42) monté sur l'architecture à engrenages (48) ;
la dépose d'un premier ensemble de fixations (105) situé dans la section avant d'un ensemble de corps central avant (60) pour démonter une paroi avant (102) d'un support de corps central avant (62) de l'ensemble de corps central avant (60) ; et
la dépose d'un second ensemble de fixations (88) pour déconnecter un support flexible (68) du support de corps central avant (62), le second ensemble de fixations (88) étant accessible depuis une section avant de l'ensemble de corps central avant (60).

2. Moteur à turbine à gaz comprenant :
une boîte de vitesses (90) définie le long d'un axe du moteur ; et
un support de corps central avant (62) défini autour dudit axe du moteur, **caractérisé en ce que** le moteur à turbine à gaz comprend également :
une paroi avant (102) montée sur ledit support de corps central avant (62), ladite paroi avant (102) pouvant être retirée dudit support de corps central avant (62) pour accéder à ladite boîte de vitesses (90), dans laquelle ledit support de corps central avant (62) inclut une bride (80) qui vient en butée contre une bride (103) de ladite paroi avant (102) ;
un premier ensemble de fixations (105) qui fixent ladite bride (103) de ladite paroi avant (102) à ladite bride (80) dudit support de corps central avant (62), ledit premier ensemble de fixations (105) étant accessible depuis une section avant du moteur à turbine à gaz ;
un support flexible (68) assurant une fixation flexible de la boîte de vitesses (90) dans le support de corps central avant (62) ; et
un second ensemble de fixations (88) qui fixe le support de corps central avant (62) au support flexible (68), le second ensemble de fixations (88) étant accessible depuis une section avant de l'ensemble de corps central avant (60).

3. Moteur à turbine à gaz selon la revendication 2, dans lequel ledit support de corps central avant (62) est défini autour d'un axe longitudinal du moteur.

4. Moteur à turbine à gaz selon la revendication 2 ou 3, dans lequel ledit support de corps central avant (62) définit au moins partiellement un trajet d'écoulement central.

5. Moteur à turbine à gaz selon l'une quelconque des revendications 2 à 4, comprenant également un ensemble d'étanchéité (64) monté sur ledit support de corps central avant (62).

6. Moteur à turbine à gaz selon l'une quelconque des revendications 2 à 5, comprenant également un ensemble de paliers (66) monté sur ledit support de corps central avant (62), et une bobine basse (30) pouvant fonctionner pour entraîner ladite boîte de vitesses (90).

7. Moteur à turbine à gaz selon l'une quelconque des revendications 2 à 6, dans lequel ladite paroi avant (102) supporte un ensemble de paliers (64) pour supporter un arbre de sortie entraîné par ladite boîte de vitesses (90), et dans lequel ledit arbre de sortie peut être actionné pour entraîner un ventilateur (42).

8. Moteur à turbine à gaz selon la revendication 3 ou 4, dans lequel ladite boîte de vitesses (90) entraîne une section de ventilateur (42) à une vitesse différente de celle d'une bobine à basse vitesse (30).
